# EUROPÄISCHE PATENTSCHRIFT

(11) **EP 0 868 614 B1**
(45) Veröffentlichungstag und Bekanntmachung des Hinweises auf die Patenterteilung: **17.11.1999**
(21) Anmeldenummer: 96942374.8
(22) Anmeldetag: 07.12.1996
(51) Int. Cl.: F16C 9/02, B23D 31/00, B22C 9/10

(54) **HERSTELLVERFAHREN FÜR EIN GUSS-MASCHINENTEIL MIT EINER DURCH BRUCHTRENNEN MEHRTEILIG GESTALTETEN LAGERANORDNUNG**
PROCESS FOR PRODUCING A CAST MACHINE PART WITH A MULTIPLE-PART BEARING ASSEMBLY FORMED BY FRACTURE
PROCEDE DE PRODUCTION D'UNE PIECE COULEE AVEC UN ENSEMBLE PALIER EN PLUSIEURS PARTIES FORME PAR RUPTURE

(30) Priorität: 19.12.1995 DE 19547388
(43) Veröffentlichungstag der Anmeldung: 07.10.1998
(73) Patentinhaber: Bayerische Motoren Werke Aktiengesellschaft, 80788 München (DE); Fritz Winter Eisengiesserei GmbH & Co. KG, 35254 Stadtallendorf (DE)
(72) Erfinder: LUCHNER, Clemens, D-85598 Baldham (DE); HENKEL, Horst, D-35232 Friedensdorf (DE)
(74) Vertreter: Bücken, Helmut
(86) Internationale Anmeldenummer: EP9605484
(87) Internationale Veröffentlichungsnummer: WO9722812

(56) Entgegenhaltungen:
- EP-A- 0 167 320
- EP-A- 0 651 166
- DE-A- 4 332 444
- DE-A- 4 413 255

## Beschreibung

Die Erfindung geht gemäß dem Oberbegriff des Patentanspruches 1 von der EP-A 0167320 aus.

Dieses Dokument zeigt und beschreibt als Guß-Maschinenteile ein Pleuel und ein abschnittsweise gezeigtes Kurbelgehäuse einer Brennkraftmaschine mit Kurbelwellenlagern, wobei jede der vorgenannten Lageranordnungen einen durch Bruchtrennen gebildeten Lagerdeckel umfaßt. Als vorbereitende Maßnahme für ein gezieltes Bruchtrennen umfaßt ferner jede Lageranordnung in der jeweiligen Lagerbohrung diametral angeordnete, relativ groß ausgebildete (makroskopische) Bruchtrennkerben, die gemäß den Ausführungen auf Seite 7 oben der gattungsbildenden EP-A 0167320 vorzugsweise maschinell erzeugt werden, aber auch durch Gießen oder Schmieden geformt werden können.

Diese Bruchtrennkerben benötigen für ein einwandfreies Bruchtrennen mittels eines eindeutigen Anrisses im Grund der Trennkerbe bzw. der Vertiefung einen relativ kleinen Spitzenradius (R→0). Bei maschineller Erzeugung der Bruchtrennkerben erklärt sich hieraus ein hoher Werkzeugverschleiß.

Der Erfindung liegt die Aufgabe zugrunde, ein Herstellverfahren für ein Guß-Maschinenteil, mit eingegossenen, als Bruchtrennkerben dienenden Vertiefungen derart zu verbessern, daß im Kerbgrund jeder Vertiefung der gewünscht kleine Spitzenradius sichergestellt ist.

Diese Aufgabe ist gemäß dem Kennzeichenteil des Patentanspruches 1 dadurch gelöst, daß die Vertiefungen mittels am Kern vorgesehener, gesonderter Vorsprünge mit standfest ausgebildeten, freien Vorsprungskanten mit jeweils einem formgebenden Radius zwischen R=0 mm und R≤0,45 mm im Bereich des als Anrißstelle wirksamen Kerbgrundes jeder Vertiefung erzeugt werden.

Die gegenüber dem für die Ausformung der Lagerbohrung üblichen Kern gesonderten Vorsprünge sind in vorteilhaft einfacher Weiterbildung aus einem standfesten Material, wie z.B. aus einem Eisenwerkstoff, aus Glas, Oxidkeramik oder einem Salzkem gewählt, wobei mit der Wahl des standfesten Materials insbesondere keilförmig gestaltete Vorsprünge vorteilhaft sind, deren schneidenartig ausgebildete freie Vorsprungskanten jeweils einen Radius zwischen R=0 mm und R<0,25 mm aufweisen.

Der Vorteil der gegenüber einem Kern gesonderten Vorsprünge ist deren Austauschbarkeit bei geringen Materialkosten und/oder deren Herstellung/Nachbearbeitung in bezug auf eine "scharfe" Vorsprungskante.

Weiter bietet sich mit der Erfindung der gesonderten Vorsprünge als weiterer Vorteil die Wahl eines Materials mit hoher Wärmeleitung wie z.B. einem Eisenwerkstoff oder eine Keramik an, wobei zur verstärkten Wärmeableitung die Vorsprünge neben einer üblichen, schützenden Kern-Schlichte im Bereich der jeweiligen Vorsprungskante zusätzlich mit einer Metalloxid-Schlichte, vorzugsweise Telluroxid-Schlichte bedeckt sind. Mit dieser Maßnahme kann insbesondere bei einem aus Gußeisenwerkstoff gebildeten Maschinenteil mittels erhöhter Wärmeableitung durch die Telluroxid-Schlichte im Randbereich jedes als Anrißstelle wirksamen Grundes jeder Vertiefung bzw. Bruchtrennkerbe eine Weißeinstrahlung bzw. eine weißerstarrte Zone erzeugt werden, die aufgrund ihrer Härte besonders rißempfindlich ist und somit vorteilhafter Weise zusätzlich der Ausbildung eines Anrisses in der Bruchtrennebene in Form eines Haarrisses dient.

Zur vorteilhaft einfachen Handhabung sind die keilförmigen Vorsprünge diametraler Vertiefungen als Endabschnitte einer den jeweiligen Kern durchsetzend angeordneten Einlage gestaltet, die aus Kostengründen vorzugsweise aus einem Flachstahlabschnitt gebildet ist. Diese Einlage ist in einem Kern, wie z. B. einem Sandkern, mittels Formschlußeinrichtungen, vorzugsweise mittels Durchbrechungen sichernd gehalten.

In einer weiteren Ausgestaltung der Erfindung stehen die gesonderten Vorsprünge mit einer ringförmigen, drucksteifen Einlage eines Kernes in Verbindung, wobei der Einlage-Ring in seinem Außendurchmesser relativ zur Lagerbohrung des jeweiligen Maschinenteils um das Maß einer fest haftend anzubringenden dünnen Kern-Sandschicht reduziert ist.

Diese Maßnahme erlaubt es insbesondere bei einem aus Gußeisenwerkstoff gebildeten Maschinenteil mit weißerstarrten Zonen im Grund jeder Vertiefung, daß über das durch den Einlage-Ring im Kern behinderte Schwinden der jeweiligen Lageranordnung in den vorgenannten weißerstarrten Zonen in Bruchtrennebene der Lageranordnung gerichtete Anrisse bzw. Haarrisse als Starterrisse für das nachgeordnete Bruchtrennen erzeugt werden.

Bei miteinander durch Guß verbundenen Lageranordnungen, wie im Paket gegossener Pleuel oder in einem Rahmen integrierter Lagerdeckeln von Kurbelwellenlagern eines Kurbelgehäuses ergibt sich mit den erzwungenen Anrissen in vorteilhafter Weise ein Spannungsabbau in den verbundenen Lagerdeckeln.

Die durch das verhinderte Schwinden erzeugten Anrisse erleichtern zusätzlich das Entfernen der jeweiligen Einlage aus einer Lageranordnung, wobei das Entfernen der Einlagen aus den Vertiefungen durch die verbrauchten Schlichten gewährleistet ist.

Die Erfindung ist anhand von in der Zeichnung dargestellten Ausführungsbeispielen beschrieben. Es zeigt
Figur 1 eine Lageranordnung für ein Kurbelwellenlager in einem angedeuteten Kurbelgehäuse einer Brennkraftmaschine,
Figuren 2 und 3 jeweils einen Kern zur Formung der Lagerbohrungen in mehreren Lageranordnungen mit unterschiedlichen Einlagen zur Kerben-Ausbildung.

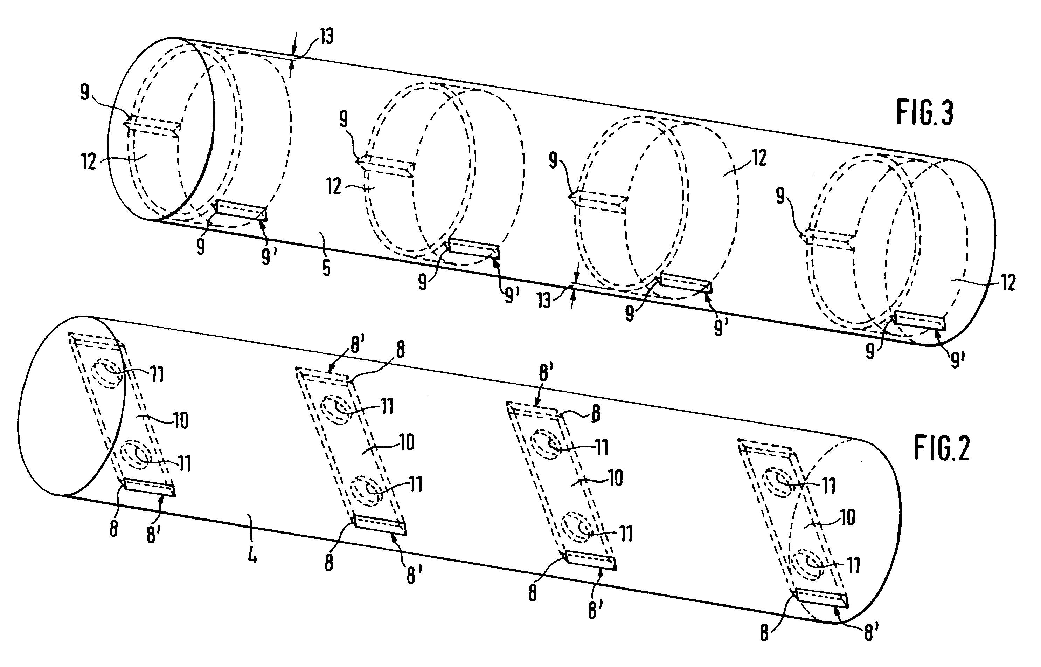

Ein lediglich angedeutetes Guß-Kurbelgehäuse 1 einer Brennkraftmaschine umfaßt miteinander fluchtende Lageranordnungen 2 zur Aufnahme einer nicht gezeigten Kurbelwelle. Die Lageranordnungen 2 umfassen jeweils eine Lagerbohrung 3, die mittels eines gemeinsamen Kernes 4 oder 5. gemäß den Figuren 2 oder 3 vorgefertigt werden. Die zur Aufnahme einer Kurbelwelle mehrteilig gestalteten Lageranordnungen 2 werden zunächst einstückig gegossen, wobei mit einem nachfolgenden Bruchtrennen eines Lagerdeckels 6 von der jeweiligen Lageranordnung 2 die jeweils mehrteilige Ausgestaltung erzielt ist.

Zur gezielten Bruchtrennung des Lagerdeckels 6 von der Lageranordnung 2 werden beim Gießen des Kurbelgehäuses 1 mit den Lageranordnungen 2 im Umfang jeder Lagerbohrung 3 diametral, als Anrißstellen dienende Vertiefung 7 ausgeformt, wie dies z. B. in der Gattungsbildenden EP-A 0167320 ganz allgemein beschrieben ist.

Die im allgemein im Querschnitt keilförmigen bzw. V-förmigen Vertiefungen 7 bzw. Bruchtrennkerben müssen für eine hohe Bruchqualität in ihrem Kerbgrunde 7' relativ scharfe Ecken bzw. sehr kleine Spitzenradien aufweisen.

Zur Überwindung dieses Problems wird ein Herstellverfahren für ein Guß-Maschinenteil mit einer durch Bruchtrennen mehrteilig gestalteten Lageranordnung 2 mit Bruchtrennkerben bzw. mit Vertiefungen 7 erfindungsgemäß dadurch weitergebildet, daß die Vertiefungen 7 mittels am Kern 4 oder 5 vorgesehener, gesonderter Vorsprünge 8 bzw. 9 mit standfest ausgebildeten, freien Vorsprungskanten 8' bzw. 9' erzeugt werden mit jeweils einem formgebenden Radius zwischen R=0 mm und R≤0,45 mm im Bereich des als Anrißstelle wirksamen Kerbgrundes 7' jeder Vertiefung 7.

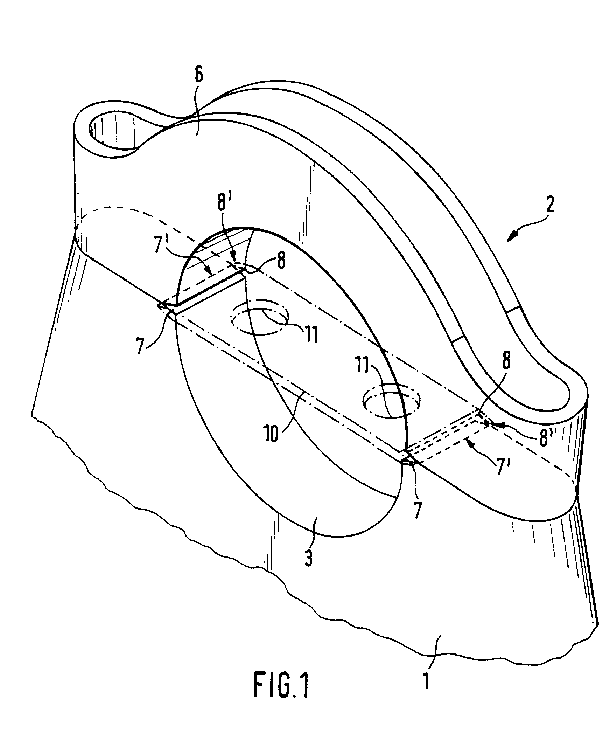

Die relativ zum jeweiligen Kern 4 oder 5 gesondert ausgebildeten Vorsprünge 8 bzw. 9 sind in vorteilhaft einfacher Weise aus einem standfesten Material wie beispielsweise einem Baustahl gefertigt, wobei die gemäß den Figuren 1 bis 3 keilförmig gestalteten Vorsprünge 8 bzw. 9 in eine schneidenartige Vorsprungskante 8' bzw. 9' mit einem Radius kleiner als 0,25 mm aufweisen.

Derart ausgeformte Bruchtrennkerben bzw. Vertiefungen 7 können in einem Maschinenteil aus einem Gußeisenwerkstoff bzgl. der Brucheinleitung auf einfache Weise vorteilhaft dadurch weitergebildet werden, daß die gesonderten Vorsprünge 8 bzw. 9 aus einem Material von hoher Wärmeleitung - z. B. Baustahl - gebildet sind, und daß diese Vorsprünge 8 bzw. 9 neben einer üblichen, schützenden Kern-Schlichte im Bereich der jeweiligen Vorsprungskante 8' bzw. 9' zusätzlich mit einer Metalloxid-Schlichte, insbesondere Telluroxid-Schlichte außerhalb des Bereiches der Bearbeitungszugabe bedeckt sind.

Mit dieser erfindungsgemäßen Maßnahme wird mittels der erhöhten Wärmeableitung durch die Telluroxid-Schlichte im Randbereich jedes beim Bruchtrennen als Anrißstelle wirksamen Grundes 7' jeder Vertiefung 7 eine Weißeinstrahlung bzw. eine weißerstarrte Zone erzeugt. Durch die damit im Grunde 7' erreichte Härte wird die Bruchtrennkerbe bzw. Vertiefung 7 rißempfindlich, wodurch zu Beginn einer Bruchtrennung in der durch die Vertiefungen festgelegten Bruchtrennebene vorteilhaft verlaufende Haar-bzw. Starterrisse erzeugt werden. Erreicht ist damit eine hohe Bruchqualität.

Wie aus Figur 2 ersichtlich, sind die keilförmigen Vorsprünge 8 in diametralen Vertiefungen 7 als Endabschnitte einer den Kern 4 durchsetzend angeordneten Einlage 10 gestaltet, wobei die Einlage 10 kostengünstig aus einem Flachstahlabschnitt aus einem Baustahl gefertigt ist. Bei einer Ausrüstung eines Sand-Kernes 4 mit gesonderten Einlagen 10 weisen diese zur Lagersicherung im Kern 4 leicht anordbare und vom Kernsand leicht ausfüllbare Formschlußeinrichtungen auf, vorzugsweise mehrere Durchbrechungen 11.

Eine abweichende Anordnung zeigt die Figur 3, wobei die Vorsprünge 9 mit einer ringförmigen, drucksteifen bzw. druckbeständigen Einlage 12 des Kernes 5 in Verbindung stehen, wobei der Einlage-Ring 12 in seinem Außendurchmesser relativ zur Lagerbohrung 3 der Lageranordnung 2 um das Maß einer festhaftend aufzubringenden, dünnen Kern-Sandschicht 13 reduziert ist.

Diese Ausgestaltung der mit den gesonderten Vorsprüngen 9 in Verbindung stehenden Einlage-Ringe 12 bewirkt bei einer aus Gußeisenwerkstoff gebildeten Lageranordnung 2 mit weißerstarrten Zonen im Grund 7' jeder Bruchtrennkerbe bzw. Vertiefung 7 über das durch die Einlage-Ringe 12 in einem jeweiligen Kern 5 behinderte Schwinden der Lageranordnung 2 in diesen weißerstarrten Zonen in Bruchtrennebene der Lageranordnung 2 gerichtete Anrisse bzw. Haarrisse als Starterrisse für das nachgeordnete Bruchtrennen. Mit dieser Maßnahme des verhinderten Schwindens werden spannungsreduzierende Anrisse erzeugt, die eine Bruchtrennung qualitativ und quantitativ wesentlich verbessern.

Weiter erleichtern diese Anrisse die Entfernung der Einlage-Ringe 12, die am Außenumfang leicht konisch gestaltet sein können.

Die Erfindung ist für Eisen- und Leichtmetall-Gußwerkstoffe geeignet, wobei diese für Einzelteile wie Pleuel oder komplexe Gußgebilde wie Kurbelgehäuse oder auch für gießtechnisch integrierte Teile wie Lagerdeckel in einem Rahmen Verwendung finden können.

## Patentansprüche

1. Herstellverfahren für ein Guß-Maschinenteil mit einer durch Bruchtrennen mehrteilig gestalteten Lageranordnung,
- bei dem in einer zunächst einstückig gegossenen Lageranordnung (2) mittels eines Kernes (4, 5) eine Lagerbohrung (3) vorgefertigt wird, in
- deren Umfangbereich für das Bruchtrennen eines Lagerdeckels (6) von der Lageranordnung (2) als Anrißstellen dienende Vertiefungen (7) beim Gießen des Maschinenteils (1) im wesentlichen diametral ausgebildet werden,
dadurch gekennzeichnet,
- daß die Vertiefungen (7) mittels am Kern (4, 5) vorgesehener, gesonderter Vorsprünge (8, 9) mit standfest ausgebildeten, freien Vorsprungskanten (8', 9') mit jeweils einem formgebenden Radius zwischen R=0 mm und R≤0,45 mm im Bereich des als Anrißstelle wirksamen Kerbgrundes (7') jeder Vertiefung (7) erzeugt werden.

2. Vorrichtung zur Durchführung des Verfahrens nach Anspruch 1, dadurch gekennzeichnet,
- daß die Vorsprünge (8, 9) des Kerns (4, 5) aus einem standfesten Material keilförmig gestaltet sind, und
- daß die im wesentlichen schneidenartig ausgebildete, freie Vorsprungskante (8', 9') einen Radius zwischen R=O mm und R≤0,25 mm aufweist.

3. Vorrichtung nach Anspruch 2, dadurch gekennzeichnet,
- daß die Vorsprünge (8, 9) aus einem Material hoher Wärmeleitung gebildet sind, und
- daß die Vorsprünge (8, 9) neben einer üblichen Kern-Schlichte im Bereich der jeweiligen Vorsprungskante (8', 9') zusätzlich mit einer Metalloxid-Schlichte bedeckt sind.

4. Herstellverfahren nach Anspruch 1 in Kombination mit Anspruch 2 und 3, dadurch gekennzeichnet,
- daß bei einem aus Gußeisenwerkstoff gebildeten Maschinenteil (1 bzw. 2) mittels erhöhter Wärmeableitung durch die Telluroxid-Schlichte im Randbereich jedes als Anrißstelle wirksamen Grundes (7') jeder Vertiefung (7) eine Weißeinstrahlung bzw. eine weißerstarrte Zone erzeugt wird.

5. Vorrichtung nach Anspruch 2 und 3 dadurch gekennzeichnet,
- daß die keilförmigen Vorsprünge (8, 9) für diametrale Vertiefungen (7) als Endabschnitte einer den jeweiligen Kern (4) durchsetzend angeordneten Einlage (10) aus einem Flachstahlabschnitt gestaltet sind und
- daß die in dem Kern (4) angeordnete Einlage (10) mittels Formschlußeinrichtungen (11) sichernd gehalten ist.

6. Vorrichtung nach Anspruch 2 und 3, dadurch gekennzeichnet,
- daß die Vorsprünge (9) mit einer ringförmigen, drucksteifen Einlage (12) eines Kernes (5) in Verbindung stehen, wobei
- der Einlage-Ring (12) in seinem Außendurchmesser relativ zur Lagerbohrung (3) des jeweiligen Maschinenteils (1 bzw. 2) um das Maß einer festhaftend aufzubringenden, dünnen Kern-Sandschicht (13) reduziert ist.

7. Herstellverfahren nach Anspruch 1 und 4 in Kombination mit den Merkmalen des Anspruchs 6, dadurch gekennzeichnet,
- daß bei einem aus Gußeisenwerkstoff gebildeten Maschinenteil (1 bzw. 2) mit weißerstarrten Zonen im Grund (7') jeder Vertiefung (7) über das durch die Einlage-Ringe (12) im Kern (5) behinderte Schwinden der jeweiligen Lageranordnung (2) in diesen weißerstarrten Zonen in Bruchtrennebene der Lageranordnung (2) gerichtete Anrisse bzw. Haarrisse als Starterrisse für das nachgeordnete Bruchtrennen erzeugt werden.

8. Herstellverfahren nach den Ansprüchen 1, 4 und 7, gekennzeichnet durch die Verwendung von Pleuel und/oder Kurbelgehäuse mit Kurbelwellenlagern, wobei letztere gegebenenfalls in einem Rahmen integriert sind.

## Claims

1. A manufacturing process for a cast machine part with a multi-part bearing assembly created by fracture separation,
- wherein a bearing bore (3), pre-fabricated by means of a core (4, 5) in a bearing assembly (2) initially cast as a single piece, in which
- depressions (7) serving as incipient crack points are formed substantially diametrically in the circumferential region of the said bearing bore (3) upon casting of the machine part (1) for the fracture separation of a bearing cap (6) from the bearing assembly (2),
characterised in that
- the depressions (7) are generated through special projections (8, 9) on the core (4, 5) with stabile free projection edges (8', 9') each with a shaping radius between R = O mm and R ≤ 0.45 mm in the region of the notch base (7') of each depression (7) acting as an incipient crack point.

2. A device for carrying out the process according to claim 1, characterised in that
- the projections (8, 9) of the core (4, 5) are of a rigid material and are wedge-shaped, and
- the substantially scissors-like, free projection edge (8', 9') has a radius between R = 0 and R ≤ 0.25 mm.

3. A device according to claim 2, characterised in that
- the projections (8, 9) are formed from a material with a high thermal conductivity, and
the projections (8, 9) additionally have a metal oxide coating in the region of the respective projection edge (8', 9') as well as a usual core coating.

4. A manufacturing process according to claim 1, in combination with claims 2 and 3, characterised in that
- for a machine part (1, 2) formed from a cast-iron material, a chilling effect or chilled zone is generated through the elevated heat dissipation through the tellurium oxide coating in the edge region of each base (7') of each depression (7) acting as an incipient fracture point.

5. A device according to claims 2 and 3, characterised in that
- the wedge-shaped projections (8, 9) for diametrical depressions (7) as the end sections of an insert (10) passing through the corresponding core (4) are in the form of a flat steel section, and
the insert (10) arranged in the core (4) is securely held through positive-locking devices (11).

6. A device according to claims 2 and 3, characterised in that
- the projections (9) are connected to an annular, pressure-resistant insert (12) of a core (5),
- with the outer diameter of the insert ring (12) reduced relative to the bearing bore (3) of the respective machine part (1 or 2) by the dimension of a thin core-sand layer (13) to be applied so that it bonds securely.

7. A manufacturing process according to claims 1 and 4, in combination with the features of claim 6, characterised in that
- for a machine part (1 or 2) of cast-iron material with chilled zones in the base (7') of each depression (7), directional incipient cracks or hairline cracks can be generated as starter cracks for subsequent fracture separation in these chilled zones in the fracture separation plane of the bearing assembly (2) through the prevented shrinkage of the respective bearing assembly (2) facilitated by the insert ring (12) in the core (5).

8. A manufacturing process according to claims 1, 4 and 7, characterised through the use of connecting rods and/or crankcases with crankshaft bearings, with the latter integrated where necessary in a frame.

## Revendications

1. Procédé de fabrication d'une pièce de moteur en fonte par un dispositif de palier en plusieurs pièces obtenu par séparation par rupture,
selon lequel,
- dans un dispositif de palier (2) tout d'abord coulé en une seule pièce, on préfabrique à l'aide d'un noyau (4, 5), un perçage de palier (3),
- dont la zone périphérique comporte, pour la séparation par rupture d'un chapeau de palier (6) par rapport au dispositif de palier (2), les points de rupture formés par des cavités (7) au moment de la coulée de la pièce (1), dans des positions essentiellement diamétrales,
caractérisé en ce que
les cavités (7) sont réalisées par des saillies particulières (8, 9) prévues sur le noyau (4, 5), ces saillies ayant des arêtes (8', 9') libres, résistantes, avec un rayon de section compris entre R=0 mm et R≤0,45 mm dans la zone du fond (7') de chaque cavité ou encoche (7) fonctionnant comme point de rupture.

2. Dispositif pour la mise en oeuvre du procédé selon la revendication 1,
caractérisé en ce que
les saillies (8, 9) du noyau (4, 5) sont réalisées en forme de coin en une matière résistante, et
- les arêtes de saillie (8', 9') libres, essentiellement en forme d'arêtes de couteau, ont un rayon compris entre R=0 mm et R≤0,25 mm.

3. Dispositif selon la revendication 2,
caractérisé en ce que
les saillies (8, 9) sont réalisées en un matériau à forte conductibilité thermique et,
- les saillies (8, 9) reçoivent, en plus de la couche de coulis de noyau, au niveau de leurs arêtes (8', 9'), une couche de coulis d'oxyde métallique.

4. Procédé de fabrication selon la revendication 1 en combinaison avec les revendications 2 et 3,
caractérisé en ce que
pour une partie de moteur (1, 2) en fonte d'acier, on réalise par conduction thermique plus élevée liée à la couche d'oxyde de tellure dans la zone du bord de chaque fond (7') fonctionnant comme point de rupture dans chaque cavité (7), un rayonnement de fonte blanche ou une zone figée en fonte blanche.

5. Dispositif selon la revendication 2 ou 3,
caractérisé en ce que
les saillies (8, 9) en forme de coin pour les cavités diamétrales (7), sont réalisées comme segments d'extrémité de chaque insert (10) traversant le noyau (4), sous la forme d'un morceau de fer plat, et
- les inserts (10) placés dans le noyau (4) sont bloqués par des moyens de liaison par la forme (11).

6. Dispositif selon les revendications 2 et 3,
caractérisé en ce que
les saillies (9) sont liées à un insert (12) annulaire, rigide en compression et appartenant à un noyau (5),
- le diamètre extérieur de l'anneau formant insert (12) est diminué par rapport à celui du perçage de palier (3) de la pièce respective (1, 2), d'une dimension qui correspond à l'épaisseur de la mince couche de sable de fonderie (13) qui doit être accrochée à l'anneau.

7. Procédé de fabrication selon les revendications 1 et 4 en combinaison avec les caractéristiques de la revendication 6,
caractérisé en ce que
- la pièce de moteur (1, 2) réalisée en fonte d'acier, avec des zones figées en fonte blanche dans le fond (7') de chaque cavité (7), sont obtenues par des anneaux (12) formant insert dans le noyau (5) interdisant le retrait du dispositif de palier (2) respectif dans ces zones à fonte blanche dans le plan de rupture du dispositif de palier (2), en formant des amorces de rupture ou des cheveux comme amorces de rupture pour la séparation par rupture effectuée ensuite.

8. Procédé de fabrication selon les revendications 1, 4 et 7,
caractérisé par
son application à la fabrication de bielles et/ou de carters de vilebrequin avec des paliers de vilebrequin, ces derniers, le cas échéant, étant intégrés dans un châssis.
